# EUROPEAN PATENT APPLICATION

(11) **EP 4 852 191 A1**
(43) Date of publication of application: **09.12.2026**
(21) Application number: 25854570.6
(22) Date of filing: 30.07.2025
(51) Int. Cl.: H01M 50/342, H01M 50/249, C09J 7/00

(54) **BATTERY MODULE**

(30) Priority: 14.08.2024 KR 20240108814
(71) Applicant: LG Energy Solution, Ltd., Seoul 07335 (KR)
(72) Inventor: KO, Yoon-Oh, Daejeon 34122 (KR); KWON, Hee-Yong, Daejeon 34122 (KR); KIM, Dong-Woo, Daejeon 34122 (KR); JANG, Mi-Jeong, Daejeon 34122 (KR)
(74) Representative: BCKIP Part mbB
(86) International application number: PCT/KR2025/011364
(87) International publication number: WO 2026/038761

(57) **Abstract**

Disclosed is a battery module. The battery module includes a case providing a space therein and having a top plate; a battery cell positioned within the case; a first cover positioned within the case, coupled to a lower surface of the top plate, and having a first score line; and a second cover positioned within the case, coupled to a lower surface of the first cover, and having a second score line.

## Description

### TECHNICAL FIELD

The present disclosure relates to a battery module.

The present application claims priority to Korean Patent Application No. 10-2024-0108814 filed on August 14, 2024 in the Republic of Korea, the disclosures of which are incorporated herein by reference.

### BACKGROUND ART

As the demand for portable electronic products such as smartphones, tablet PCs, and smart watches increases significantly and electric vehicles become increasingly widespread, research is actively being conducted on batteries installed the portable electronic products, especially secondary batteries that can be repeatedly charged and discharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be called a battery cell. In addition, multiple battery modules may be connected to each other to form a battery pack.

However, if a plurality of battery modules are included in the battery pack as above and each battery module includes a plurality of battery cells, the battery pack may be vulnerable to a thermal chain reaction between battery modules or between battery cells. For example, if an event such as thermal runaway occurs inside one battery module, the thermal runaway needs to be prevented from propagating to other battery modules or other battery cells. If thermal runaway propagation between battery modules or battery cells is not properly prevented, an event occurring in a specific battery module or battery cell may cause a chain thermal reaction in other battery modules or other battery cells, which may cause an explosion or fire or enlarge the scale thereof.

In particular, if an event such as thermal runaway occurs in a battery module, gas or flame may be randomly discharged to the outside. At this time, if the discharge of gas or flame is not properly controlled, gas or flame may be discharged toward another battery module, which may cause a thermal chain reaction in other battery modules. In particular, a module terminal may exist at the front side of the battery module, and a component such as a module bus bar may exist for electrical connection with another battery module or battery pack. Accordingly, if flame is discharged to the front side of the battery module, the module terminal may be damaged inside the battery pack, causing an electrical short. In addition, since another battery module may exist at the front side of the battery module, if flame is discharged to the front side of a specific battery module, the discharged flame may be directed to another battery module, which may easily cause a fire to spread between battery modules.

If the thermal propagation between battery modules or battery cells is not properly controlled, the voltage drop of the battery module or battery pack may occur rapidly. This may cause a sudden shutdown of a device equipped with the battery module or battery pack, resulting in unexpected damage. For example, if a voltage drop of the battery pack occurs suddenly while an electric vehicle is in operation, it is impossible to secure sufficient time to move the electric vehicle to a safe location.

Moreover, if a fire or explosion occurs suddenly due to failure to properly control thermal propagation between battery modules or battery cells, there is a high possibility of causing casualties to users. For example, when thermal runaway occurs in an electric vehicle, if a certain amount of time is not secured before it progresses to a full-blown fire, the occupants may not be able to escape safely.

### DISCLOSURE

### Technical Problem

The present disclosure is designed to solve the problems of the related art, and therefore the present disclosure is directed to providing a battery module having an improved structure to appropriately control the emission of flame, etc. generated inside the battery module, and a battery pack and a vehicle including the same.

The present disclosure is also directed to providing a structure capable of smoothly discharging a venting gas generated inside a battery module.

The present disclosure is also directed to providing a structure capable of blocking a venting gas generated externally from flowing into the battery module.

However, the technical problems that the present disclosure seeks to solve are not limited to the above, and other problems not mentioned herein will be clearly understood by those skilled in the art from the following disclosure.

### Technical Solution

In one aspect of the present disclosure, there is provided a battery module comprising: a case providing a space therein and having a top plate; a battery cell positioned within the case; a first cover positioned within the case, coupled to a lower surface of the top plate, and having a first score line; and a second cover positioned within the case, coupled to a lower surface of the first cover, and having a second score line.

In addition, the first score line and the second score line may have different patterns.

In addition, the first score line may include a main line having a first end and a second end; and an intersection line located between the first end and the second end and extending in a direction intersecting the main line.

In addition, the intersection line may include a first intersection line and a second intersection line, which are arranged along a longitudinal direction of the main line.

In addition, the second score line may include a third intersection line located between the first end and the first intersection line and extending along the direction intersecting the main line.

In addition, the second score line may include a fourth intersection line located between the first intersection line and the second intersection line and extending along the direction intersecting the main line.

In addition, the first score line may further include an auxiliary line extending from the first end in a direction away from the second end.

In addition, the top plate may have a venting hole that exposes the first score line.

In addition, the hole may be configured to have a diameter longer than the first score line.

In addition, the second score line may be formed in a portion facing the first score line.

In addition, the first score line may be formed to penetrate the first cover.

In addition, the second score line may be formed to penetrate the second cover.

In addition, the battery module may further comprise a first adhesive member arranged between the first cover and the top plate.

In addition, the first adhesive member may have an exposure hole that communicates with the venting hole and exposes the first score line.

In addition, the battery module may further comprise a second adhesive member arranged between the first cover and the second cover.

A battery pack according to another aspect of the present disclosure includes the battery module according to the present disclosure.

A vehicle according to still another aspect of the present disclosure includes the battery module according to the present disclosure.

### Advantageous Effects

According to at least one of the embodiments of the present disclosure, when gas or flame is generated inside the battery module, the emission of such gas or flame may be appropriately controlled.

According to at least one of the embodiments of the present disclosure, the electrical safety of a battery module may be improved.

According to at least one of the embodiments of the present disclosure, heat propagation may be suppressed.

According to at least one of the embodiments of the present disclosure, the transmission of a thermal event due to a flame or gas outside the battery module may be suppressed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery module according to an embodiment of the present disclosure.
FIG. 2 is an exploded view showing some components of the battery module of FIG. 1.
FIG. 3 is an enlarged view showing some components of FIG. 2.
FIG. 4 is an enlarged view showing a portion C of FIG. 1.
FIG. 5 is an enlarged view showing a second score line of a second cover of FIG. 3.
FIG. 6 is a diagram showing the second score line in the portion C of FIG. 1.
FIG. 7 is a cross-sectional view taken along the line A-A' of FIG. 1.
FIG. 8 is a drawing showing a modified embodiment of FIG. 7.
FIG. 9 is a cross-sectional view taken along the line B-B' of FIG. 1.
FIG. 10 is a drawing showing a modified embodiment of FIG. 9.
FIG. 11 is a diagram showing the change in FIG. 7 when a thermal event occurs.
FIG. 12 is a diagram showing the change in FIG. 1 when a thermal event occurs.
FIG. 13 is a diagram showing some components of a battery pack according to an embodiment of the present disclosure.
FIG. 14 is a diagram showing a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

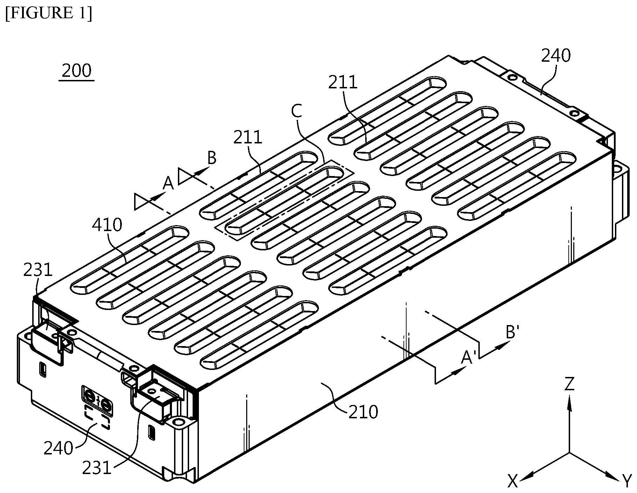

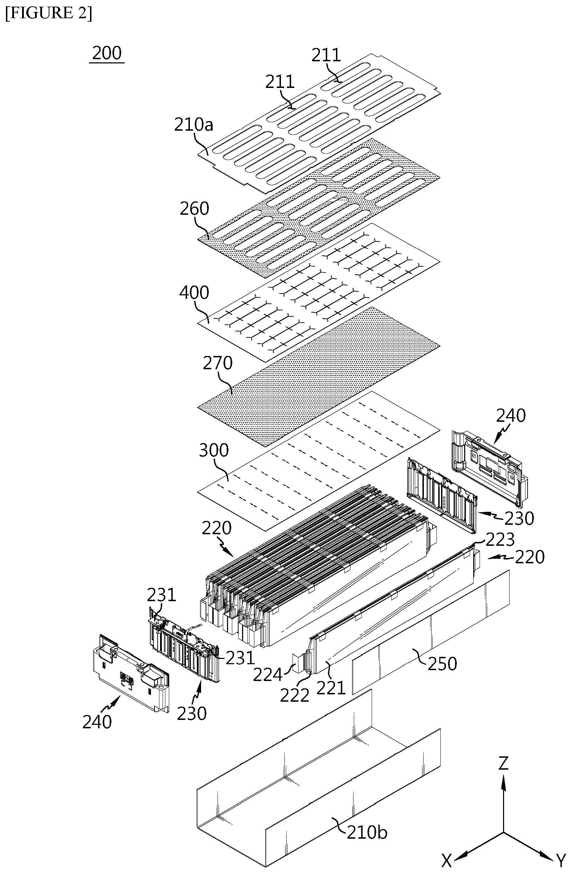

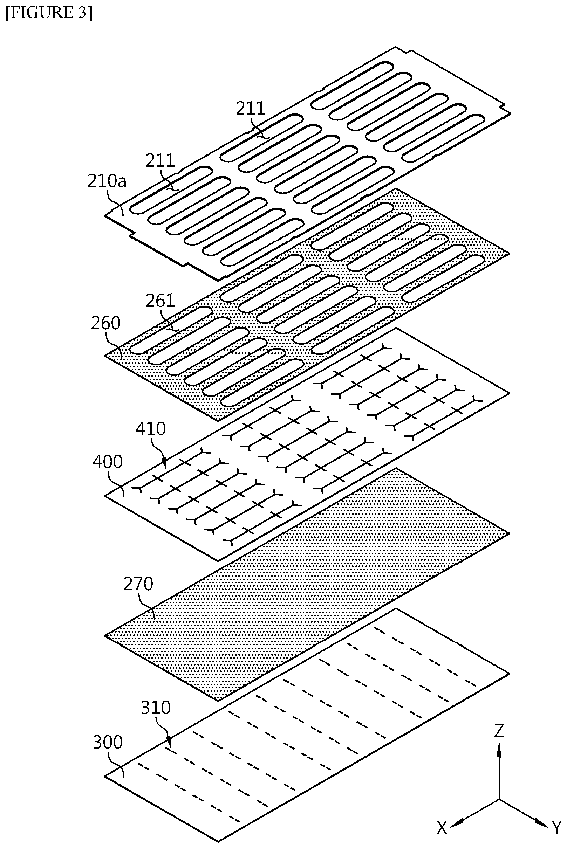

FIG. 1 is a diagram showing a battery module 200 according to an embodiment of the present disclosure. FIG. 2 is an exploded view showing some components of the battery module 200 of FIG. 1. FIG. 3 is an enlarged view showing some components of FIG. 2.

Referring to FIGS. 1 to 3, the battery module 200 may include a case 210. The case 210 may have a rectangular parallelepiped shape. The case 210 may include a top plate 210a and a lower frame 210b. The case 210 may provide a space therein. The lower frame 210b may have a bottom plate and a pair of side plates. The top plate 210a may have a rectangular shape. The top plate 210a may be installed, fastened, coupled, fixed, or attached to the pair of side plates. For example, the top plate 210a may be coupled to the lower frame 210b by welding. The case 210 may have open front and rear sides. The top plate 210a may have a venting hole 211. The venting hole 211 may communicate the inside and the outside of the case 210 with each other.

The cell 220 may be positioned inside the case 210. The battery cell 220 may refer to a secondary battery. In particular, the battery cell 220 may be a pouch-type secondary battery. However, the shape of the battery cell 220 is not limited to a pouch shape, and the battery cell 220 may have various shapes such as a cylindrical shape or a rectangular parallelepiped shape. The battery cell 220 may be provided in plurality. The battery cell 220 may be accommodated inside the case 210.

The first cover 400 may be located inside the case 210. The first cover 400 may have a rectangular shape. The first cover 400 may be located below the top plate 210a. The first cover 400 may be coupled, fastened, attached, or fixed to the lower surface of the top plate 210a. The first cover 400 may contain a fire-resistant material. The first cover 400 may contain a heat-resistant material. The first cover 400 may contain a flame-retardant material. For example, the first cover 400 may contain a ceramic material. The first cover 400 may contain a fire-retardant material.

The first cover 400 may include a first score line 410. The first score line 410 may be used as a term encompassing and collectively referring to a perforated line 410, a notching line 410, a cutting line 410, a shredding line 410, a tear line 410, or a separation line 410. The first score line 410 may be configured to be easily separated by pressure applied to the first cover 400.

The second cover 300 may be located inside the case 210. The second cover 300 may have a rectangular shape. The second cover 300 may be located below the first cover 400. The second cover 300 may be coupled, fastened, attached, or fixed to the lower surface of the first cover 400. The second cover 300 may contain a fire-resistant material. The second cover 300 may contain a heat-resistant material. The second cover 300 may contain a flame-retardant material. For example, the second cover 300 may contain a ceramic material. The second cover 300 may contain a fire-retardant material. The first cover 400 and the second cover 300 may be made of the same material. The first cover 400 and the second cover 300 may have the same thickness. The first cover 400 and the second cover 300 may have the same size. For example, the thickness of the first cover 400 may be 0.127 mm. For example, the thickness of the second cover 300 may be 0.127 mm.

The second cover 300 may include a second score line 310. The second score line 310 may be used as a term encompassing and collectively referring to a perforated line 310, a notching line 310, a cutting line 310, a shredding line 310, a tear line 310, or a separation line 310. The second score line 310 may be configured to be easily separated by pressure applied to the second cover 300.

When a thermal event occurs from the battery cell 220, the venting gas G may be discharged through the top plate 210a of the case 210. The venting gas G may separate the second score line 310. The venting gas G may separate the first score line 410. As a result, the venting gas G may be discharged to the outside of the battery module 200. Meanwhile, when the battery module 200 is exposed to the venting gas G generated from the outside, the first cover 400 and the second cover 300 may prevent the venting gas G generated from the outside from flowing into the battery module 200. As a result, the propagation of the thermal event may be suppressed or blocked.

Referring to FIGS. 1 to 3, the first score line 410 and the second score line 310 may have different patterns. The first score line 410 may be separated more easily than the second score line 310. The minimum pressure required for separating the first score line 410 may be lower than the minimum pressure required for separating the second score line 310.

If a thermal event occurs from battery cell 220, the high-pressure venting gas G may sequentially separate the second score line 310 and the first score line 410 and be discharged to the outside of the battery module 200. Meanwhile, if battery module 200 is exposed to the venting gas G generated from the outside, the second score line 310 may support the first score line 410 to prevent the first score line 410 from separating.

When the battery module 200 is exposed to the venting gas G generated from the outside, the second score line 310 may not be separated even if the first score line 410 is separated. As a result, the venting gas G generated from the outside may be blocked from flowing into the battery module 200.

Referring to FIGS. 1 to 3, the battery cell 220 may be provided in plurality. The plurality of battery cells 220 may be stacked in the right and left direction or the Y-axis direction. The battery cell 220 may include an accommodation portion 221 that accommodates an electrode assembly, a first sealing portion 222 protruding to the front and rear of the accommodation portion 221, and a second sealing portion 223 protruding to the top of the accommodation portion 221. Also, the battery cell 220 may include electrode leads 224 protruding to the front and rear of the first sealing portion 222, respectively. Each battery cell 220 may extend along the front and rear direction or the X-axis direction. The electrode leads 224 may protrude to the front and rear of the accommodation portion 221, respectively.

The pad 250 may be positioned between the plurality of battery cells 220. The pad 250 may be positioned between at least some of the battery cells 220 and/or at the periphery of the stack. For example, the pad 250 may be configured to be positioned between every four battery cells 220 stacked in the right and left direction.

The pad 250 may contain an elastic material to enable swelling absorption of the battery cell 220. For example, the pad 250 may be made of a foam material such as polyurethane. Alternatively, the pad 250 may contain a material capable of blocking heat or flames. For example, the pad 250 may contain an insulating material or fire-retardant material such as silicone or mica.

The bus bar frame assembly 230 may be provided at the front and rear sides of the plurality of battery cells 220, respectively. The bus bar frame assembly 230 may be electrically connected to the electrode leads 224 of the plurality of battery cells 220.

The pair of end covers 240 may be coupled to the front and rear sides of the case 210, respectively. The pair of end covers 240 may cover the front and rear sides of the case 210. The end cover 240 may have a rectangular shape. The end cover 240 may form the outer appearance of the battery module 200.

The battery module 200 may include a power terminal 231 protruding to the front of the case 210. The power terminal 231 may be provided on the bus bar frame assembly 230. The power terminal 231 may protrude from the bus bar assembly 230. The power terminal 231 may be provided as a pair. The power terminal 231 may be exposed to the outside of the battery module 200.

Referring to FIGS. 1 to 3, the top plate 210a may have a venting hole 211. The venting hole 211 may be provided in plurality. The venting hole 211 may be elongated along the front and rear direction or the X-axis direction. The venting hole 211 may expose the first cover 400. The venting hole 211 may expose the first score line 410. The first score line 410 may be provided in plurality. The plurality of venting holes 211 may be arranged to correspond with the plurality of first score lines 410 in one-to-one relationship. The venting hole 211 may communicate the inside of the case 210 with the outside.

If a thermal event occurs from battery cell 220, the high-pressure venting gas G may sequentially separate the second score line 310 and the first score line 410 and be discharged to the outside of the battery module 200 through the venting hole 211.

If the battery module 200 is exposed to the venting gas G generated from the outside, the second score line 310 may not be separated even if the first score line 410 is separated. As a result, the venting gas G generated from the outside may be blocked from flowing into the battery module 200 through the venting hole 211.

Referring to FIGS. 1 to 3, a first adhesive member 260 may be arranged between the first cover 400 and the top plate 210a. The first adhesive member 260 may have a sheet shape. For example, the first adhesive member 260 may be a double-sided tape. The first adhesive member 260 may have a rectangular shape. The first adhesive member 260 may have the same size as the top plate 210a. The first adhesive member 260 may have the same size as the first cover 400.

The first adhesive member 260 may have an exposure hole 261. The exposure hole 261 may be provided in plurality. The plurality of exposure holes 261 may be arranged to correspond with the plurality of venting holes 211 in one-to-one relationship. The plurality of exposure holes 261 may be arranged to correspond with the plurality of first score lines 410 in one-to-one relationship. The exposure hole 261 may expose the first score line 410. The exposure hole 261 may have the same shape as the venting hole 211. The exposure hole 261 may have the same size as the venting hole 211. Each first score line 410 may be exposed to the outside of the battery module 200 through the exposure hole 261 and the venting hole 211.

Referring to FIGS. 1 to 3, a second adhesive member 270 may be arranged between the second cover 300 and the first cover 400. The second adhesive member 270 may have a sheet shape. For example, the second adhesive member 270 may be a double-sided tape. The second adhesive member 270 may have a rectangular shape. The second adhesive member 270 may have the same size as the top plate 210a. The second adhesive member 270 may have the same size as the first adhesive member 260. The second adhesive member 270 may have the same size as the second cover 300.

Referring to FIGS. 1 to 3, the second score line 310 may be provided in plurality. The plurality of second score lines 310 may be arranged to correspond with the plurality of first score lines 410 in one-to-one relationship. The plurality of first venting holes 211, the plurality of exposure holes 261, the plurality of first score lines 410, and the plurality of second score lines 310 may be arranged to correspond to each other in one-to-one relationship. The first venting hole 211 may face the exposure hole 261. The first score line 410 may face the exposure hole 261. The second score line 310 may face the first score line 410.

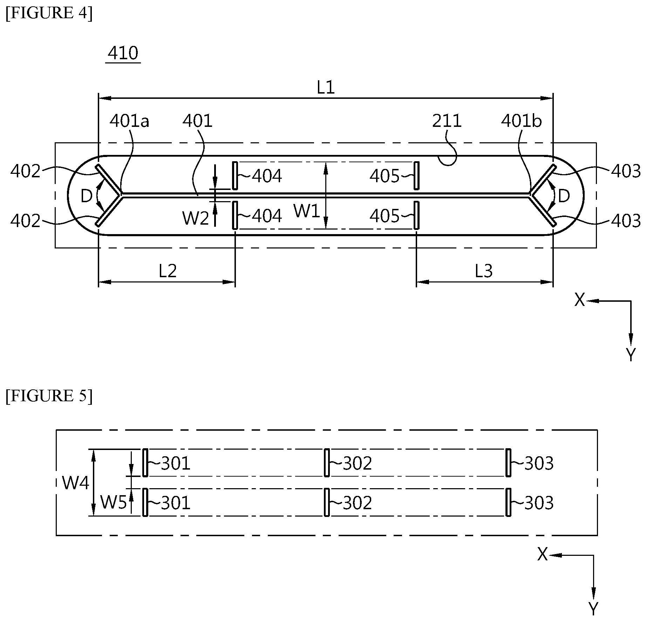

FIG. 4 is an enlarged view showing a portion C of FIG. 1.

Referring to FIG. 4, the first score line 410 may include a main line 401. The main line 401 may include a first end 401a and a second end 401b. The main line 401 may be a straight line connecting the first end 401a and the second end 401b. The main line 401 may extend along the front and rear direction or the X-axis direction.

The intersection line 404, 405 may be located between the first end 401a and the second end 401b. The intersection line 404, 405 may extend along the direction intersecting the main line 401. The intersection line 404, 405 may extend along the right and left direction or the Y-axis direction.

The first score line 410 includes the main line 401 and the intersection line 404, 405, thereby increasing the open area of the first cover 400 when a thermal event occurs.

The intersection line 404, 405 may be provided in plurality. The intersection line 404, 405 may include a first intersection line 404 and a second intersection line 405. The first intersection line 404 and the second intersection line 405 may be arranged along the front and rear direction or the X-axis direction. The first score line 410 may have a fishbone shape.

The first score line 410 has the plurality of intersection lines 404, 405, so that even if the first venting hole 211 has a shape that is elongated in the front and rear direction, the open area of the first cover 400 may be enlarged when a thermal event occurs.

Referring to FIG. 4, the first score line 410 may include a first auxiliary line 402 extending from the first end 401a. The first auxiliary line 402 may extend from the first end 401a in a direction away from the second end 401b. The first auxiliary line 402 may extend forward or along the +X-axis direction from the first end 401a. The first auxiliary line 402 may be provided as a pair. The pair of first auxiliary lines 402 may extend to form an angle D. The angle D may be less than 180 degrees.

The first score line 410 may include a second auxiliary line 403 extending from the second end 401b. The second auxiliary line 403 may extend from the second end 401b in a direction away from the first end 401a. The second auxiliary line 403 may extend rearward or along the -X-axis direction from the second end 401b. The second auxiliary line 403 may be provided as a pair. The pair of second auxiliary lines 403 may extend to form an angle D. The angle D may be less than 180 degrees.

The first score line 410 includes the auxiliary line 402, 403, thereby increasing the open area of the first cover 400 when a thermal event occurs.

For example, the length L1 of the first score line 410 in the front and rear direction or X-axis direction may be 133.4 mm. The length L1 from the front end of the first auxiliary line 402 to the rear end of the second auxiliary line 403 may be 133.4 mm. The distance L2 from the front end of the first auxiliary line 402 to the first intersection line 404 may be 44.5 mm. The distance L3 from the second intersection line 405 to the rear end of the second auxiliary line 403 may be 44.5 mm. The length W1 of the first intersection line 404 in the right and left direction or Y-axis direction may be 19 mm. The first intersection line 404 may be composed of two parts. Each of the two parts constituting the first intersection line 404 may have a length of 7.5 mm. The two parts constituting the first intersection line 404 may have a gap as much as the distance W2. W2 may be 4 mm. The length W1 of the second intersection line 405 in the right and left direction or Y-axis direction may be 19 mm. The second intersection line 405 may be composed of two parts. Each of the two parts constituting the second intersection line 405 may have a length of 7.5 mm. The two parts constituting the second intersection line 405 may have a gap as much as the distance W2. W2 may be 4 mm.

Referring to FIG. 4, the venting hole 211 may have a size larger than the first score line 410. The diameter of the venting hole 211 in the front and rear direction or X-axis direction may be larger than the length L1 of the first score line 410. The diameter of the venting hole 211 in the right and left direction or Y-axis direction may be larger than the length W1 of the intersection line 404, 405.

FIG. 5 is an enlarged view showing a second score line 310 of a second cover 300 of FIG. 3.

Referring to FIG. 5, the second score line 310 may include a third intersection line 301. The third intersection line 301 may be located between the first end 401a and the second end 401b. The third intersection line 301 may extend along a direction intersecting the main line 401. The third intersection line 301 may extend along the right and left direction or the Y-axis direction.

The second score line 310 includes the third intersection line 301, thereby opening the second cover 300 and facilitating the opening of the first cover 400 when a thermal event occurs. In addition, the second score line 310 supports the first score line 410, thereby preventing the first score line 410 from being opened by external gas.

The second score line 310 may include a fourth intersection line 302. The second score line 310 may include a fifth intersection line 303. The third intersection line 301, the fourth intersection line 302, and the fifth intersection line 303 may be arranged along the front and rear direction or the X-axis direction.

The second score line 310 includes the plurality of intersection lines 301, 302, 303, so that even if the first venting hole 211 has a shape that is elongated in the front and rear direction, when a thermal event occurs, the second cover 300 may be opened and the first cover 400 may be easily opened.

The length W4 of the third intersection line 301 in the right and left direction or Y-axis direction may be 19 mm. The third intersection line 301 may be composed of two parts. Each of the two parts constituting the third intersection line 301 may have a length of 7.5 mm. The two parts constituting the third intersection line 301 may have a gap as much as the distance W5. W5 may be 4 mm.

The length W4 of the fourth intersection line 302 in the right and left direction or Y-axis direction may be 19 mm. The fourth intersection line 302 may be composed of two parts. Each of the two parts constituting the fourth intersection line 302 may have a length of 7.5 mm. The two parts constituting the fourth intersection line 302 may have a gap as much as the distance W5. W5 may be 4 mm.

The length W4 of the fifth intersection line 303 in the right and left direction or Y-axis direction may be 19 mm. The fifth intersection line 303 may be composed of two parts. Each of the two parts constituting the fifth intersection line 303 may have a length of 7.5 mm. The two parts constituting the fifth intersection line 303 may have a gap as much as the distance W5. W5 may be 4 mm.

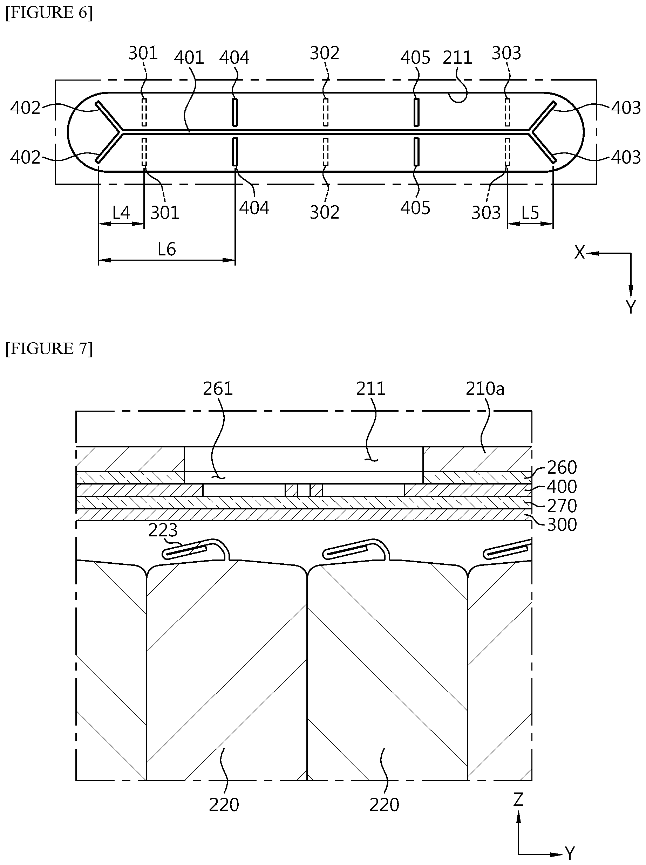

FIG. 6 is a diagram showing the second score line 310 in the portion C of FIG. 1.

Referring to FIG. 6, the second score line 310 is expressed with a dotted line to indicate the relative positions of the first score line 410 and the second score line 310. Referring to FIGS. 4 to 6, the third intersection line 301 may be located between the first end 401a and the first intersection line 404. For example, the distance L4 between the front end of the first auxiliary line 402 and the third intersection line 301 may be 23 mm. Since the third intersection line 301 is located between the first end 401a and the first intersection line 404, the second score line 310 may stably support the first score line 410.

Referring to FIGS. 4 to 6, the fourth intersection line 302 may be located between the first intersection line 404 and the second intersection line 405. The fourth intersection line 302 may be located at the center of the length L1 of the first score line 410. For example, the distance L6 between the front end of the first auxiliary line 402 and the fourth intersection line 302 may be 66.7 mm.

Referring to FIGS. 4 to 6, the fifth intersection line 303 may be located between the second end 401b and the second intersection line 405. For example, the distance L5 between the rear end of the second auxiliary line 403 and the fifth intersection line 303 may be 23 mm. Since the fifth intersection line 303 is located between the second end 401b and the second intersection line 405, the second score line 310 may stably support the first score line 410.

FIG. 7 is a cross-sectional view taken along the line A-A' of FIG. 1.

Referring to FIG. 7, the first score line 410 may be formed to penetrate the first cover 400. As a result, the first score line 410 may be separated more easily.

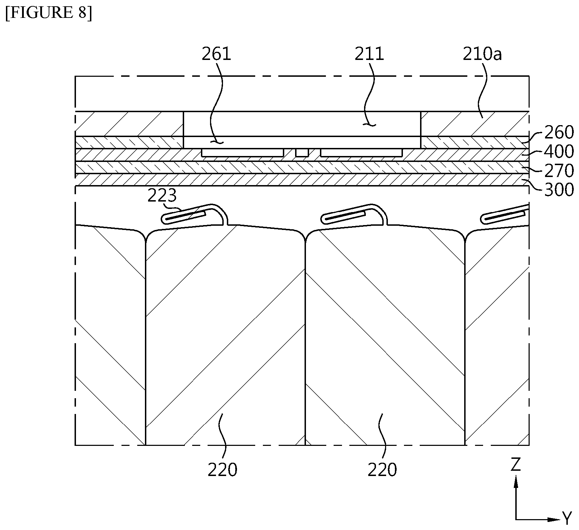

FIG. 8 is a drawing showing a modified embodiment of FIG. 7.

Referring to FIG. 8, the first score line 410 may not penetrate the first cover 400. For example, the first score line 410 may be formed to a depth of about half the thickness of the first cover 400. The minimum pressure required for separating the first score line 410 of the embodiment of FIG. 8 may be higher than the minimum pressure required for separating the first score line 410 of the embodiment of FIG. 7.

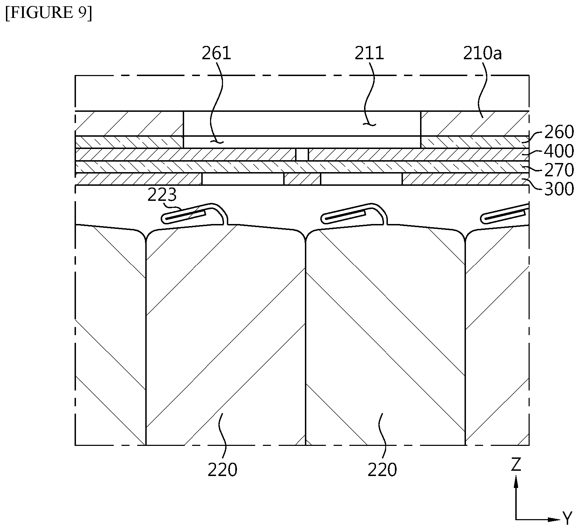

FIG. 9 is a cross-sectional view taken along the line B-B' of FIG. 1.

Referring to FIG. 9, the second score line 310 may be formed to penetrate the second cover 300. As a result, the second score line 310 may be separated more easily.

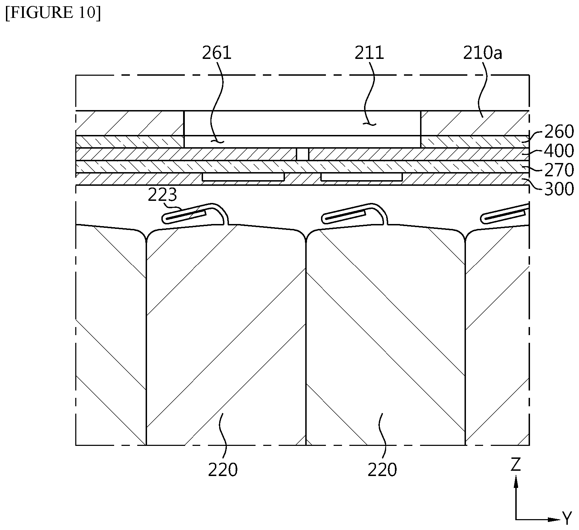

FIG. 10 is a drawing showing a modified embodiment of FIG. 9.

Referring to FIG. 10, the second score line 310 may not penetrate the second cover 300. For example, the second score line 310 may be formed to a depth of about half the thickness of the second cover 300. The minimum pressure required for separating the second score line 310 of the embodiment of FIG. 10 may be higher than the minimum pressure required for separating the second score line 310 of the embodiment of FIG. 9.

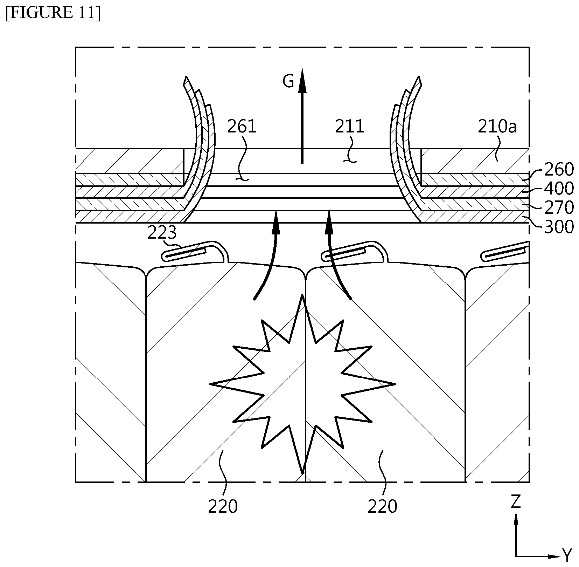

FIG. 11 is a diagram showing the change in FIG. 7 when a thermal event occurs.

Referring to FIG. 11, when a thermal event occurs from the battery cell 220, the venting gas G may be discharged through the second sealing portion 223. The venting gas G may apply pressure to the second cover 300 to open the second score line 310. If the second score line 310 is opened, the venting gas G may apply pressure to the first cover 400 to open the first score line 410. If the first score line 410 is opened, the venting gas G may be discharged to the outside of the battery module 200 through the venting hole 211.

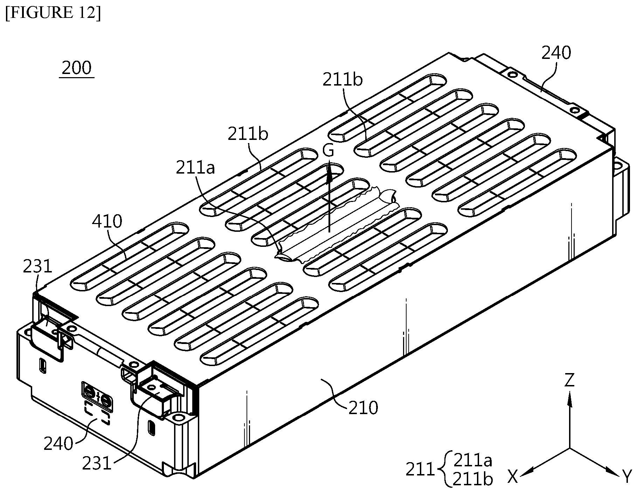

FIG. 12 is a diagram showing the change in FIG. 1 when a thermal event occurs.

Referring to FIG. 12, when a thermal event occurs, the venting gas G may be discharged through a specific venting hole 211a. At this time, the first score line 410 facing the remaining venting hole 211b may not be opened. As a result, the venting gas G may be blocked from flowing into the battery module 200 through the remaining venting holes 211b.

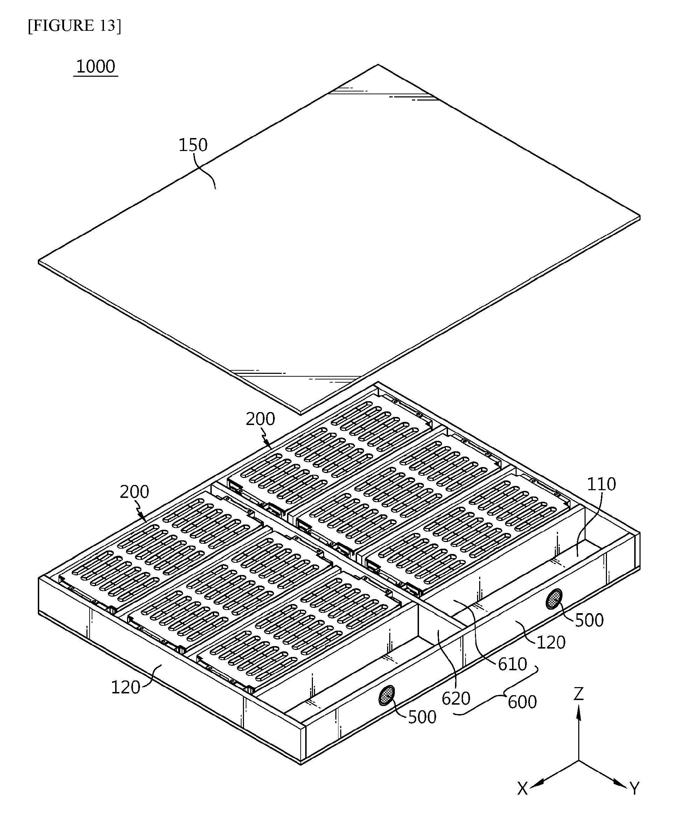

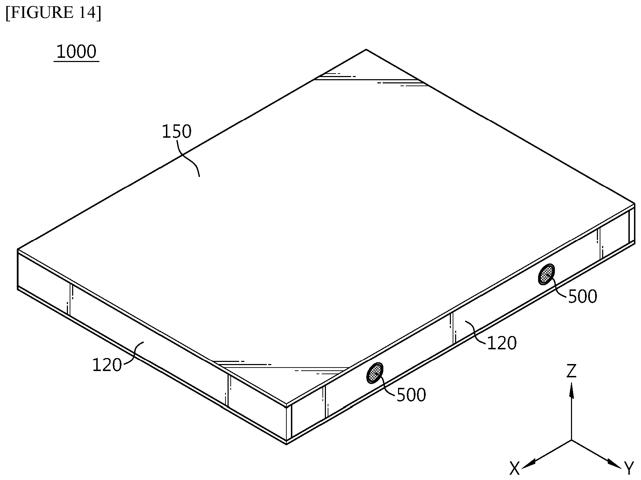

FIG. 13 is a diagram showing some components of a battery pack 1000 according to an embodiment of the present disclosure. FIG. 14 is a diagram showing a battery pack 1000 according to an embodiment of the present disclosure.

Referring to FIGS. 13 and 14, the battery pack 1000 according to an embodiment of the present disclosure may include the battery module 200 of the present disclosure. The battery pack 1000 may include a plurality of battery modules 200.

The pack case 100 may include a base frame 110. The base frame 110 may have a rectangular shape. The base frame 110 may have a flat shape. The base frame 110 may form the outer appearance of the battery pack 1000. The base frame 110 may provide an inner space for the battery pack 1000.

The pack case 100 may include a side wall 120. The side wall 120 may be installed, fastened, coupled, fixed, or attached to the upper surface of the base frame 110. The side wall 120 may be composed of four pieces. The side wall 120 may be arranged along the perimeter of the base frame 110. The side wall 120 may form the outer appearance of the battery pack 1000. The side wall 120 may provide an inner space.

The pack case 100 may include a pack cover 150. The pack cover 150 may have a rectangular frame shape.

The pack cover 150 may be installed, fastened, coupled, fixed or attached to the side wall 120. The pack cover 150 may cover the inner space of the battery pack 1000.

The battery pack 1000 may include a partition wall 600. The partition wall 600 may include a first partition wall 610 and a second partition wall 620. The partition wall 600 may be provided in plurality. The partition wall 600 may be installed, fastened, fixed, coupled, or attached to the upper surface of the base frame 110. The partition wall 600 may partition the inner space of the battery pack 1000. The battery module 200 may be located in the space partitioned by the partition wall 600.

The battery pack 1000 may include a venting device 500. The venting device 500 may be installed on the side wall 120. For example, the venting device 500 may be installed on the front side wall 120. For example, the venting device 500 may be a gas valve. The venting device 500 may open to discharge gas when the pressure inside the pack case 100 increases. In addition, the venting device 500 may block external air from flowing into the pack case 100. The venting device 500 may be provided in plurality.

In addition, the battery pack 1000 according to the present disclosure may further include various components other than the battery module 200 such as various components of the battery pack 1000 known at the time of filing of this application, such as a BMS, a bus bar, a relay, a current sensor, etc.

Meanwhile, components such as a BMS, a bus bar, a relay, and a current sensor may be included as components of the battery module 200 according to the present disclosure. In this case, components such as a BMS, a bus bar, a relay, and a current sensor may be provided inside the case 210. In this case, the battery module may also be referred to as a battery pack.

The battery module 200 according to the present disclosure may be applied to a vehicle such as an electric vehicle or a hybrid electric vehicle. That is, the vehicle according to the present disclosure may include the battery module 200 according to the present disclosure or the battery pack according to the present disclosure. In addition, the vehicle according to the present disclosure may further include various other components included in the vehicle in addition to the battery module or the battery pack. For example, the vehicle according to the present disclosure may further include a vehicle body, a motor, a control device such as an ECU (electronic control unit), in addition to the battery module 200 according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module comprising:
a case providing a space therein and having a top plate;
a battery cell positioned within the case;
a first cover positioned within the case, coupled to a lower surface of the top plate, and having a first score line; and
a second cover positioned within the case, coupled to a lower surface of the first cover, and having a second score line.

2. The battery module according to claim 1,
wherein the first score line and the second score line have different patterns.

3. The battery module according to claim 1,
wherein the first score line includes:
a main line having a first end and a second end; and
an intersection line located between the first end and the second end and extending in a direction intersecting the main line.

4. The battery module according to claim 3,
wherein the intersection line includes a first intersection line and a second intersection line, which are arranged along a longitudinal direction of the main line.

5. The battery module according to claim 4,
wherein the second score line includes a third intersection line located between the first end and the first intersection line and extending along the direction intersecting the main line.

6. The battery module according to claim 4,
wherein the second score line includes a fourth intersection line located between the first intersection line and the second intersection line and extending along the direction intersecting the main line.

7. The battery module according to claim 3,
wherein the first score line further includes an auxiliary line extending from the first end in a direction away from the second end.

8. The battery module according to claim 1,
wherein the top plate has a venting hole that exposes the first score line.

9. The battery module according to claim 8,
wherein the hole is configured to have a diameter longer than the first score line.

10. The battery module according to claim 1,
wherein the second score line is formed in a portion facing the first score line.

11. The battery module according to claim 1,
wherein the first score line is formed to penetrate the first cover.

12. The battery module according to claim 1,
wherein the second score line is formed to penetrate the second cover.

13. The battery module according to claim 1, further comprising:
a first adhesive member arranged between the first cover and the top plate.

14. The battery module according to claim 13,
wherein the first adhesive member has an exposure hole that communicates with the venting hole and exposes the first score line.

15. The battery module according to claim 1, further comprising:
a second adhesive member arranged between the first cover and the second cover.

16. A battery pack comprising the battery module according to any one of claims 1 to 15.

17. A vehicle comprising the battery module according to any one of claims 1 to 15.
